# FASCICULE DE BREVET EUROPEEN

(11) **EP 2 043 452 B1**
(45) Date de publication et mention de la délivrance du brevet: **19.02.2014**
(21) Numéro de dépôt: 07803783.5
(22) Date de dépôt: 26.06.2007
(51) Int. Cl.: A23G 3/56

(54) **PORTE-SUCETTE SÉCURISÉ**
SICHERHEITSSTIEL FÜR LUTSCHER
SAFETY LOLLIPOP HOLDER

(30) Priorité: 03.07.2006 FR 0605973
(43) Date de publication de la demande: 08.04.2009
(73) Titulaire: Lopez, Katia, 31000 Toulouse (FR)
(72) Inventeur: Lopez, Katia, 31000 Toulouse (FR)
(74) Mandataire: Cabinet BARRE LAFORGUE & associés
(86) Numéro de dépôt international: PCT/FR2007/001071
(87) Numéro de publication internationale: WO 2008/003845

(56) Documents cités:
- US-A- 5 874 119
- US-B1- 6 375 236

## Description

L'invention concerne un porte-sucette sécurisé. Un porte-sucette sécurisé selon l'invention est notamment destiné à la protection des enfants en vue de prévenir tout risque de blessures consécutives à la consommation d'une sucette.

Selon le Bulletin Epidémiologique Hebdomadaire N° 19-20/2004 de l'Institut de Veille Sanitaire du Ministère de la Santé et de la Protection Sociale, les accidents de la vie courante représentent plus de 12% des motifs d'hospitalisation et près de 10% des dépenses de santé. Chez l'enfant de moins de 5 ans, 61 % des lésions provoquées par un accident de la vie courante concernent la tête. Ces lésions sont notamment le fait d'enfants qui courent avec un crayon ou une sucette dans la bouche, ces derniers perforant le palais des enfants lors d'une chute ou venant étouffer l'enfant. A ce titre, un certain nombre d'établissements ont placé les sucettes sur la liste des objets interdits à l'école.

US 6 375 236 décrit un dispositif de protection pour sucettes. Selon ce document, une poignée de protection pour sucettes comprend un corps principal en deux parties, une partie inférieure et une partie supérieure comprenant une ouverture centrale adaptée pour recevoir un bâtonnet d'une sucette et une portion plane perpendiculaire au bâtonnet qui présente des dimensions adaptées pour couvrir la bouche d'un enfant de manière à interdire l'introduction du bâtonnet dans la gorge d'un enfant. La partie inférieure comprend également une ouverture centrale alignée avec l'ouverture centrale de la partie supérieure de manière à ce qu'elle puisse enserrer l'extrémité inférieure du bâtonnet de sucette pour le maintenir en position.

Ce dispositif connu n'offre en réalité qu'une faible protection de l'enfant. En particulier, rien n'empêche un enfant de retirer la sucette de la poignée de protection et de s'exposer de surcroît aux mêmes risques qu'en l'absence de la poignée de protection. De plus, la poignée de protection étant souvent agrémentée de motifs décoratifs et ludiques, tels qu'un personnage, un animal, etc., un enfant est incité à retirer la sucette de la poignée de protection pour pouvoir jouer avec cette dernière tout en continuant à sucer sa sucette.

Un autre dispositif, permettant d'assurer un pincement du bâtonnet, est connu du brevet US 5874119.

L'objectif de l'invention est de fournir un porte-sucette sécurisé qui protège efficacement et réellement l'enfant, notamment contre les risques de perforation du palais et les risques d'étouffement.

L'invention vise aussi un porte-sucette sécurisé qui interdise à un enfant de retirer la sucette du porte-sucette sans l'aide d'un adulte.

L'invention vise aussi un porte-sucette économique et réutilisable.

L'invention vise aussi un porte-sucette qui puisse faire office de présentoir d'une sucette dans une boutique.

L'invention vise aussi un porte-sucette sécurisé qui puisse assurer la protection hygiénique d'une sucette avant sa consommation.

Pour ce faire, un porte-sucette sécurisé selon l'invention comprend :
- un canon s'étendant le long et autour d'un axe, dit axe longitudinal, ledit canon étant adapté pour recevoir par une de ses extrémités, dite extrémité proximale, un bâtonnet d'une sucette comprenant un bonbon de sucette agencé à une extrémité de ce bâtonnet,
- une collerette agencée au voisinage de ladite extrémité proximale dudit canon et s'étendant radialement,
- un corps principal agencé autour dudit canon et présentant une forme et des dimensions adaptées pour qu'une main d'un enfant puisse s'en saisir,
caractérisé en ce qu'il comprend des moyens de blocage unidirectionnel par coincement conique d'un bâtonnet de sucette logé dans ledit canon, lesdits moyens de blocage étant adaptés pour bloquer longitudinalement ce bâtonnet à l'intérieur dudit canon et empêcher toute extraction axiale de ce bâtonnet du côté de l'extrémité proximale dudit canon, de manière à ce qu'un enfant ne puisse pas retirer la sucette du porte-sucette par cette extrémité proximale.

Un porte-sucette selon l'invention permet donc de maintenir une sucette en position à l'intérieur d'un canon et de protéger un enfant contre les risques de perforation de son palais par la présence d'une collerette de protection agencée à une extrémité proximale dudit canon.

Avantageusement et selon l'invention, ladite collerette présente une forme et des dimensions radiales supérieures aux dimensions d'une bouche d'un enfant présentant en ouverture maximale une longueur de l'ordre de 4 cm et une largeur de l'ordre de 3 cm, de manière à empêcher tout risque de pénétration, dans une bouche d'un enfant, du bâtonnet d'une sucette logée dans ledit canon.

Par ailleurs, un porte-sucette selon l'invention comprend des moyens de blocage longitudinal unidirectionnel d'un bâtonnet de sucette à l'intérieur dudit canon, ce qui interdit le retrait du bâtonnet par l'extrémité proximale. Un enfant n'est donc pas à même de retirer la sucette du porte-sucette une fois que cette dernière à été positionnée à l'intérieur du canon. Un enfant ayant à sa disposition un porte-sucette selon l'invention n'est donc plus soumis d'une part aux risques de perforation de son palais par enfoncement de la sucette, notamment du bâtonnet de sucette à l'intérieur de sa gorge, ni aux risques d'étouffement, et d'autre part à la tentation de retirer la sucette du porte-sucette, cette dernière ne pouvant pas être retirée du porte-sucette par son extrémité proximale.

Les dimensions de la collerette selon l'invention sont avantageusement définies de manière à ce qu'elles interdisent la pénétration d'un bâtonnet logé dans le canon dans une bouche d'un enfant présentant en ouverture maximale, une longueur de 4 cm et une largeur de 3 cm. Ces dimensions correspondent à une bouche moyenne d'un enfant de 10 ans. Un porte-sucette selon l'invention est donc particulièrement adapté à un enfant de 2 à 10 ans.

Pour ce faire, une collerette selon l'invention présente avantageusement une longueur de l'ordre de 5 cm et une largeur de l'ordre de 4 cm. La forme de la collerette est adaptée pour permettre à un enfant d'accéder au bonbon de sucette agencé à l'extrémité du bâtonnet de sucette, notamment pour assurer que la collerette puisse venir en appui contre la bouche de l'enfant sans être gênée par le nez de l'enfant.

Un canon d'un porte-sucette selon l'invention peut présenter toutes formes et dimensions compatibles avec la réception d'un bâtonnet d'une sucette.

Typiquement, un bâtonnet d'une sucette présente une forme cylindrique, notamment cylindrique à section droite transversale circulaire ou carrée. Un tel bâtonnet est surmonté d'un bonbon pouvant présenter n'importe quelle forme, de préférence de telle sorte que l'encombrement radial hors tout du bonbon soit supérieur à la section droite transversale du bâtonnet de la sucette. La section droite transversale d'un canon selon l'invention présente de préférence une forme et des dimensions radiales proches de celles du bâtonnet de telle sorte que le canon enserre le bâtonnet de près. Pour des bâtonnets cylindriques, à section droite transversale circulaire, le diamètre interne du canon est avantageusement choisi de manière à présenter un diamètre de moins de 10% supérieur à celui du diamètre du bâtonnet.

Avantageusement et selon l'invention, le canon présente une section droite transversale dont les dimensions sont plus petites que l'encombrement transversal hors tout d'un bonbon de sucette de telle sorte que le bonbon de sucette forme une butée de maintien du bonbon de sucette à l'extérieur dudit canon de manière à ce qu'un enfant puisse sucer ledit bonbon.

La section droite transversale d'un canon selon l'invention présentant de préférence des dimensions radiales inférieures à l'encombrement radial hors tout d'un bonbon d'une sucette agencé solidairement à l'extrémité d'un bâtonnet d'une sucette permet la formation d'une butée de maintien de la sucette à l'extérieur du canon. Un enfant est donc à même de sucer le bonbon de la sucette.

Les moyens de blocage unidirectionnel selon l'invention sont du type à coincement conique. Ces moyens de blocage garantissent qu'un enfant ne peut pas retirer la sucette du porte-sucette.

Ces moyens de blocage sont adaptés pour permettre le déplacement d'un bâtonnet à l'intérieur dudit canon de l'extrémité proximale vers l'extrémité distale dudit canon, de manière à ce que le bâtonnet de sucette puisse être retiré du porte-sucette par l'extrémité distale dudit canon après que le bonbon de sucette ait été consommé.

Un porte-sucette selon l'invention permet donc le positionnement d'un bâtonnet d'une sucette à l'intérieur de son canon. Les moyens de blocage autorisent le déplacement du bâtonnet à l'intérieur du canon de son extrémité proximale vers son extrémité distale. Ce déplacement est de préférence bloqué par le bonbon de sucette qui forme une butée contre le canon. De plus, les moyens de blocage interdisent le retrait du bâtonnet par l'extrémité proximale. Dès lors, une fois qu'une sucette a été positionnée dans le canon du porte-sucette, cette dernière est solidairement maintenue et ne peut être délogée du canon. En revanche, lorsque le bonbon est totalement consommé, il est possible de faire glisser le bâtonnet de sucette à l'intérieur du canon, les moyens de blocage autorisant le déplacement du bâtonnet de l'extrémité proximale vers l'extrémité distale. Dès lors, il est possible d'éjecter le bâtonnet de sucette par l'extrémité distale du canon et d'ajuster une nouvelle sucette dans le canon par l'extrémité proximale. En d'autres termes, les moyens de blocage selon l'invention autorisent un positionnement des sucettes par l'extrémité proximale et un retrait des bâtonnets, une fois les sucettes terminées, par l'extrémité distale.

Les moyens de blocage peuvent être agencés à différents endroits du porte-sucette. Ils peuvent notamment être agencés au voisinage de l'extrémité proximale du canon, à l'intérieur du canon, à une extrémité du canon, etc.

Néanmoins, avantageusement et selon l'invention, lesdits moyens de blocage sont agencés en regard de l'extrémité distale dudit canon.

Cela permet de faire glisser un bâtonnet d'une sucette à l'intérieur du canon et de ne rencontrer les moyens de blocage qu'à la sortie du canon. Pour ce faire, le canon présente de préférence une longueur plus petite que la longueur d'un bâtonnet d'une sucette.

Avantageusement, en combinaison, le corps principal présente des dimensions longitudinales supérieures aux dimensions longitudinales du bâtonnet de sucette de telle sorte que le bâtonnet de sucette soit entièrement logé à l'intérieur du corps principal. En particulier, l'extrémité distale du bâtonnet de sucette n'est alors pas accessible et ne risque pas de blesser un enfant.

Selon une variante de l'invention, les moyens de blocage sont agencés à l'intérieur du canon et ce dernier présente une longueur plus grande que la longueur du bâtonnet de sucette. Un porte-sucette selon cette variante offre une grande protection, le bâtonnet de sucette étant entièrement logé à l'intérieur du canon et donc totalement inaccessible à un enfant.

Ces moyens de blocage peuvent être réalisés par tout moyen connu en soi. Ils peuvent notamment comprendre des griffes de préhension adaptées pour laisser passer un bâtonnet dans un sens et le bloquer dans le sens opposé. Les moyens de blocage sont réalisés selon le principe d'un coincement conique.

Néanmoins, avantageusement et selon l'invention, les moyens de blocage comprennent un disque élastique agencé perpendiculairement audit axe longitudinal, ledit disque comprenant :
- une ouverture centrale, d'axe coïncidant avec ledit axe longitudinal, et de dimensions radiales inférieures aux dimensions hors tout de la section droite transversale d'un bâtonnet,
- au moins deux fentes radiales traversantes reliées à ladite ouverte centrale du disque et délimitant ainsi au moins deux portions de disque agencées de part et d'autre desdites fentes, lesdites portions de disques étant adaptées pour plier sous l'effet d'une pression exercée par un bâtonnet de sucette sur le disque, ce qui permet le passage du bâtonnet de sucette à travers le disque dans un sens et bloque le déplacement du bâtonnet en sens inverse.

Un disque selon l'invention peut être réalisé en tout type de matériau flexible élastique, tel qu'un thermoplastique, un matériau métallique fin, tel qu'un acier fin inoxydable, etc.

Un disque selon l'invention peut comprendre un nombre varié de fentes délimitant des portions de disques flexibles. Selon un mode de réalisation avantageux, un disque comprend quatre fentes délimitant quatre portions légèrement élastiques faisant office de griffes. Selon un mode de réalisation, chaque fente peut comprendre une ouverture ménagée à l'extrémité de la fente opposée à l'ouverture centrale de manière à faciliter les flexions des portions de disque imposées par une pression exercée par le bâtonnet sur le disque.

Selon une variante de l'invention, un porte-sucette selon l'invention comprend des moyens de neutralisation, à deux états, des moyens de blocage, un état actif dans lequel les moyens de blocage unidirectionnel sont neutralisés de manière à ce qu'un opérateur puisse retirer la sucette du canon du porte-sucette par l'extrémité proximale et un état inactif dans lequel les moyens de blocage empêchent le retrait d'un bâtonnet de sucette par l'extrémité proximale, le passage de l'état inactif à l'état actif nécessitant l'exécution d'au moins un mouvement indépendant du maniement de la sucette de sorte que le retrait d'une sucette par l'extrémité proximale requière au moins deux mouvements conjugués.

Un porte-sucette selon cette variante de l'invention permet, en plus d'un retrait du bâtonnet par l'extrémité distale du porte-sucette, un retrait d'un bâtonnet par l'extrémité proximale du canon par la coopération des moyens de neutralisation des moyens de blocage. Ainsi, un porte-sucette selon l'invention permet l'extraction d'une sucette hors du porte-sucette par un adulte, y compris avant que la sucette ne soit totalement consommée, ce qui s'avère utile et nécessaire, par exemple si un enfant a fait tomber sa sucette dans un bac à sable, rendant cette dernière impropre à la consommation. Cette extraction de la sucette par l'extrémité proximale n'est possible que par la mise en oeuvre d'au moins deux mouvements conjugués, la neutralisation des moyens de blocage et l'extraction de la sucette en tant que telle. Cette double condition assure qu'un enfant de moins de 10 ans ne puisse pas la mettre en oeuvre. Ce dernier ne peut donc pas neutraliser les moyens de blocage. De préférence, aux fins de lever tout risque de neutralisation des moyens de blocage par un enfant, le passage de l'état inactif à l'état actif des moyens de neutralisation impose le développement d'une force supérieure à la force de poussée normale d'un enfant de moins de 10 ans. Cette valeur est avantageusement fixée à plus de 50 N, notamment de l'ordre de 60 N suivant les normes en vigueur dans le domaine des jouets.

Ces moyens de neutralisation peuvent être réalisés de différentes façons et agencés à différents endroits.

Néanmoins, avantageusement et selon l'invention, le corps principal comprend :
- une colonne d'axe coïncidant avec l'axe longitudinal et portant ledit disque élastique,
- une tête portant ledit canon et ladite collerette, ladite tête étant montée sur ladite colonne par l'intermédiaire de moyens de coulissement élastique adaptés pour permettre le coulissement de ladite tête le long de la colonne par une pression exercée par un opérateur sur ladite tête et pour la ramener en position initiale en l'absence de pression, ledit coulissement permettant à l'extrémité distale dudit canon d'exercer une pression sur ledit disque élastique de manière à faire plier les portions dudit disque et permettre le déblocage du bâtonnet dudit disque élastique.

La coopération des moyens de coulissement élastiques de la tête et de la colonne du corps du porte-sucette constituent, selon un mode avantageux de réalisation de l'invention, les moyens de neutralisation des moyens de blocage. En particulier, une pression exercée par un opérateur sur la tête fait coulisser la tête le long de la colonne. Le canon étant porté par la tête et le disque élastique qui fait office de moyens de blocage étant porté par la colonne, le coulissement de la tête le long de la colonne assure le déplacement du canon par rapport au disque élastique, jusqu'à ce que le canon vienne exercer une pression sur le disque élastique. Le canon enserrant le bâtonnet de la sucette, la pression exercée par le canon sur le disque écarte les bords du disque et libère donc le bâtonnet des griffes constituées par ces bords de disque. Dès lors, tout en maintenant cette pression sur la tête, un opérateur peut retirer la sucette par l'extrémité proximale. Les moyens de coulissement étant élastiques, si l'opérateur relâche sa pression sur la tête, le canon s'écarte du disque élastique et le disque élastique se referme. Ainsi, selon ce mode de réalisation, un opérateur doit exécuter au moins deux mouvements conjugués de manière concomitante pour pouvoir retirer un bâtonnet de sucette par l'extrémité proximale.

Avantageusement, un porte-sucette selon l'invention comprend un couvercle protecteur amovible adapté pour être agencé sur la tête de manière à ce qu'il protège la sucette dont le bâtonnet est logé dans ledit canon lorsque la sucette n'est pas consommée, et pour être agencé sur l'extrémité de la colonne à l'opposé lorsque la sucette va être consommée.

Avantageusement et selon l'invention, la collerette présente une forme et des dimensions similaires à celles d'une tétine.

L'invention concerne en outre un porte-sucette sécurisé caractérisé en combinaison par tout ou partie des caractéristiques mentionnées ci-dessus ou ci-après.

D'autres caractéristiques, buts et avantages de l'invention apparaîtront à la lecture de la description suivante qui présente à titre d'exemple non limitatif un mode de réalisation de l'invention, en référence aux dessins annexés ; sur ces dessins :
- la figure 1 est une vue schématique d'un porte-sucette sécurisé selon un mode de réalisation de l'invention,
- les figures 2a et 2b sont des vues schématiques en coupe d'un porte-sucette sécurisé selon un autre mode de réalisation de l'invention,
- la figure 3 est une vue schématique d'un disque flexible élastique formant des moyens de blocage d'un bâtonnet de sucette selon un mode de réalisation de l'invention,
- la figure 4 est une vue schématique d'une collerette de protection d'un porte-sucette sécurisé selon un mode de réalisation de l'invention,
- la figure 5 est une vue schématique de griffes flexibles élastiques formant des moyens de blocage d'un bâtonnet de sucette selon un autre mode de réalisation de l'invention.

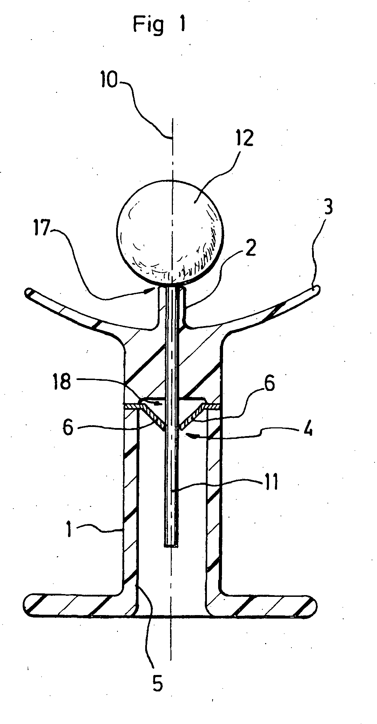

Un porte-sucette, selon le mode de réalisation de la figure 1, comprend un canon 2 s'étendant autour d'un axe, dit axe 10 longitudinal, une collerette 3 agencée au voisinage d'une extrémité du canon 2, dite extrémité 17 proximale, et un corps 1 principal agencé autour du canon 2 et présentant une forme et des dimensions adaptées pour qu'une main d'un enfant puisse s'en saisir. Selon le mode de réalisation de la figure 1, le corps 1 principal présente une forme générale cylindrique à section droite transversale circulaire d'un diamètre de 2 cm, de telle sorte qu'il puisse être saisi par un enfant. Selon d'autres modes de réalisation, le corps 1 principal peut présenter d'autres formes et d'autres dimensions.

Le canon 2 est adapté pour recevoir par l'extrémité 17 proximale, un bâtonnet 11 d'une sucette comprenant un bonbon 12 agencé à une extrémité de ce bâtonnet 11. Les sucettes couramment distribuées dans le commerce comprennent des bâtonnets qui présentent un diamètre de l'ordre de 0,4 cm. Le porte-sucette selon le mode de réalisation de la figure 1 est particulièrement destiné à ce type de sucette. Dès lors, le canon 2 présente un diamètre intérieur légèrement supérieur à 0,4 cm, notamment de l'ordre de 0,5 cm. Bien entendu, selon d'autres modes de réalisation, le canon 2 peut présenter un diamètre intérieur différent adapté pour maintenir un bâtonnet 11 d'une sucette de forme et de dimensions différentes.

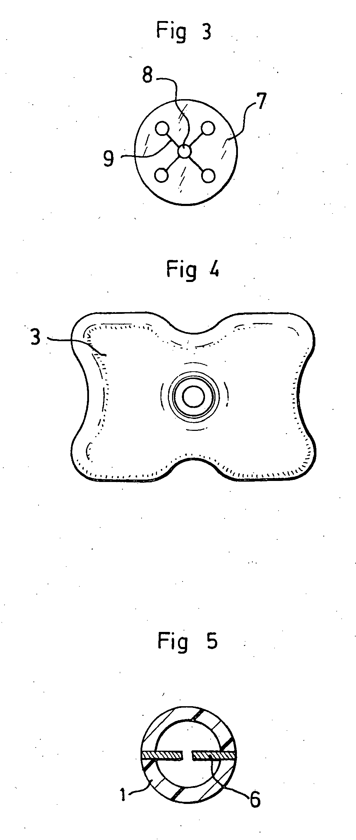

Un porte-sucette selon l'invention comprend une collerette 3 qui s'étend radialement et présente une forme et des dimensions radiales supérieures aux dimensions d'une bouche d'un enfant de manière à empêcher tout risque de pénétration, dans une bouche d'un enfant, du bâtonnet 11 d'une sucette logée dans le canon 2. La forme et les dimensions de la collerette peuvent être variées et sont adaptées pour couvrir au moins les lèvres et la bouche d'un enfant. Selon le mode de réalisation présenté sur la figure 4, la collerette 3 présente la forme d'une collerette de tétine d'une longueur de l'ordre de 5 cm et de largeur de l'ordre de 3 cm. La collerette 3 selon l'invention présente de manière avantageuse des dimensions compatibles avec la norme européenne EN 1400 relative aux tétines pour les bébés et les jeunes enfants.

Un porte-sucette selon l'invention comprend en outre des moyens 4 de blocage unidirectionnel longitudinal d'un bâtonnet 11 de sucette logé dans le canon 2. Ces moyens 4 de blocage sont adaptés pour bloquer longitudinalement ce bâtonnet 11 à l'intérieur du canon 2 et empêcher toute extraction axiale de ce bâtonnet 11 du côté de l'extrémité 17 proximale du canon 2, de manière à ce qu'un enfant ne puisse pas retirer la sucette du porte-sucette par cette extrémité 17 proximale.

Selon le mode de réalisation de la figure 1, ces moyens 4 de blocage sont réalisés par deux griffes 6 en matière thermoplastique ou en acier fin agencées en regard de l'extrémité 18 distale du canon 2. Selon un mode de réalisation, ces griffes 6 sont fixées sur la paroi 5 interne du corps 1 principal et réparties uniformément autour de l'axe 10 longitudinal faisant office d'axe de symétrie du corps 1 principal. Selon un autre mode de réalisation, ces griffes 6 sont maintenues par le corps 1 principal. Ces griffes 6 sont agencées de manière à présenter un angle de l'ordre de 45° avec la paroi 5 interne. La longueur des griffes 6 est choisie de manière à ce que l'extrémité qui n'est pas reliée au corps 1 principal soit proche de l'axe 10 longitudinal et des extrémités des autres griffes 6. De cette manière, les extrémités libres des griffes 6 délimitent une ouverture centrale adaptée pour s'agrandir par pression du bâtonnet 11 lors d'un déplacement de ce dernier de l'extrémité 17 proximale vers l'extrémité 18 distale, ce qui permet le passage de ce dernier à travers les griffes 6. En revanche, une tentative de déplacement en sens inverse du bâtonnet 11 a tendance à rétrécir l'ouverture centrale délimitée par les griffes, ce qui bloque le bâtonnet 11 entre les griffes 6, interdisant ainsi son déplacement de l'extrémité 18 distale vers l'extrémité 17 proximale et donc son extraction par l'extrémité proximale.

Un corps 1 principal selon l'invention comprend en outre une enceinte centrale cylindrique d'axe coïncidant avec l'axe 10 longitudinal et ménagée entre l'extrémité 18 distale du canon 2 et l'extrémité du porte-sucette opposée au canon 2. Ainsi, un bâtonnet 11 de sucette déplacé de l'extrémité 17 proximale vers l'extrémité 18 distale peut être retiré du porte-sucette par cette enceinte. En pratique, lorsque le bonbon 12 de la sucette est totalement consommé, il est possible d'extraire le bâtonnet 11 du porte-sucette en introduisant une nouvelle sucette dans le canon 2, de telle sorte que le nouveau bâtonnet de la nouvelle sucette vienne chasser le bâtonnet 11 de la sucette consommée vers l'extrémité 18 distale et vers l'enceinte centrale du corps principal.

La figure 5 est une vue schématique, selon un mode de réalisation de l'invention, des griffes 6 formant les moyens de blocage.

Ces moyens 4 de blocage peuvent être réalisés par d'autres moyens que des griffes 6. Ils peuvent notamment être réalisés par des systèmes construits sur le principe du coincement conique. Ils peuvent être réalisés par des moyens mécaniques ou par des moyens électriques ou une combinaison de moyens électriques et de moyens mécaniques.

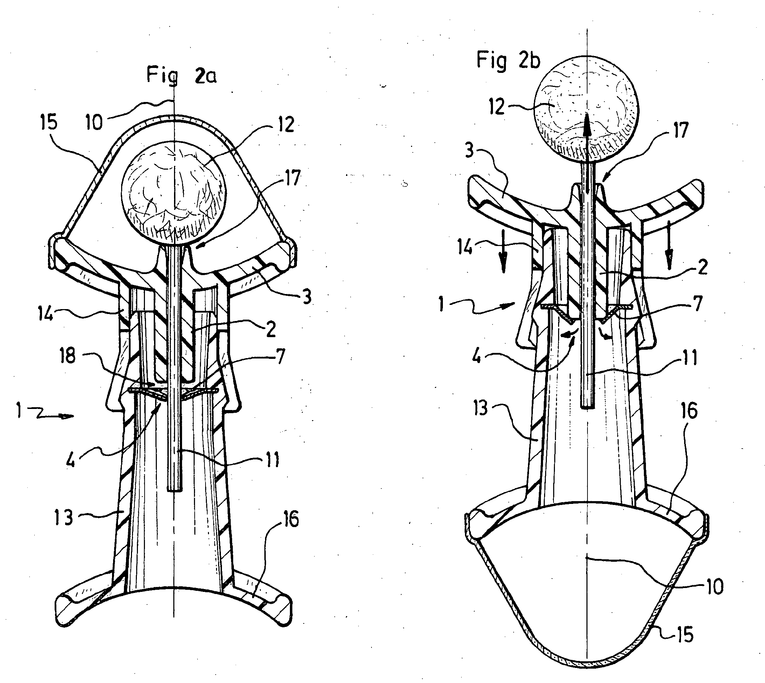

Les figures 2a et 2 b présentent un porte-sucette selon un autre mode de réalisation de l'invention. Sur ces figures, un porte-sucette comprend un canon 2, une collerette 3 agencée au voisinage de l'extrémité 17 proximale du canon 2, un corps 1 principal et des moyens 4 de blocage unidirectionnel longitudinal d'un bâtonnet 11 d'une sucette logée dans le canon 2.

Selon ce mode de réalisation, les moyens 4 de blocage sont formés par un disque 7 flexible élastique.

Ce disque 7 flexible élastique est agencé perpendiculairement à l'axe 10 longitudinal et comprend une ouverture 8 centrale, d'axe coïncidant avec l'axe 10 longitudinal, et de dimensions radiales inférieures aux dimensions hors tout de la section droite transversale d'un bâtonnet 11 d'une sucette. Ce disque 7 comprend également quatre fentes 9 radiales traversant l'épaisseur du disque de part en part et débouchant vers l'ouverture 8 centrale du disque 7.

Selon d'autres modes de réalisation, le disque 7 peut comprendre un nombre différent de fentes 9.

Ces quatre fentes 9 délimitent ainsi quatre portions de disque 7 agencées de part et d'autre des fentes 9 qui sont adaptées pour plier sous l'effet d'une pression exercée par un bâtonnet 11 de sucette au niveau de l'ouverture 8 centrale du disque 7, ce qui permet le passage du bâtonnet 11 de sucette à travers le disque 7 dans un sens et bloque le déplacement du bâtonnet 11 en sens inverse.

Ce disque 7 flexible élastique peut être réalisé en tout type de matériau flexible élastique, notamment en acier inoxydable fin.

Par ailleurs, selon le mode de réalisation des figures 2a et 2b, le corps 1 principal est constitué de deux parties, une colonne 13 d'axe coïncidant avec l'axe 10 longitudinal et portant le disque 7 élastique, et une tête 14 portant le canon 2 et la collerette 3.

Selon le mode de réalisation des figures 2a et 2b, ce disque 7 est maintenu à l'intérieur du corps 1 principal en regard de l'extrémité 18 distale de la colonne 13.

La colonne 13 et la tête 14 sont adaptées pour être emboîtées l'une dans l'autre et la tête 14 est adaptée pour coulisser le long de la colonne 13 par l'intermédiaire de moyens de coulissement élastique adaptés pour permettre le coulissement de la tête 14 le long de la colonne 13 par une pression exercée par un opérateur sur la tête 14 et pour la ramener en position initiale en l'absence de pression.

La figure 2a présente le porte-sucette selon ce mode de réalisation, dans une position où aucune pression n'est exercée sur la tête 14. Le bâtonnet 11 est bloqué par le disque 7.

La figure 2b présente le porte-sucette dans une position où un opérateur exerce une pression sur la tête 14. Cette pression entraîne le coulissement de la tête 14 le long de la colonne 13. Ce coulissement entraîne le déplacement du canon 2 par rapport au disque 7 élastique. Ce déplacement transmet la pression exercée par l'opérateur sur le disque 7 élastique, ce qui contribue à faire plier les portions du disque 7 et libère ainsi le bâtonnet 11 de l'emprise du disque 7.

Un opérateur est alors à même, tout en maintenant la pression exercée sur la tête 14, de retirer une sucette du canon 2 par l'extrémité 17 proximale.

Cette combinaison forme des moyens de neutralisation des moyens de blocage longitudinal unidirectionnel et permettent, par l'exécution d'au moins deux mouvements conjugués, de procéder à l'extraction de la sucette du porte-sucette par son extrémité 17 proximale.

Ces moyens de neutralisation peuvent selon d'autres modes de réalisation nécessiter d'autres mouvements conjugués pour passer de l'état inactif à l'état actif. Par exemple, associés à la pression sur la tête, ces moyens de neutralisation peuvent nécessiter la rotation d'un quart de tour de la tête 14 par rapport à la colonne 13 pour permettre la neutralisation des moyens de blocage.

Le porte-sucette selon le mode de réalisation des figures 2a et 2b, comprend en outre un couvercle 15 de protection adapté pour être positionné par un opérateur sur la tête 14 de manière à couvrir une sucette agencée dans le porte-sucette. Les moyens d'assemblage réversible entre la tête 14 et le couvercle 15 peuvent être de tout type, notamment des moyens d'assemblage par emboîtement par conformation de formes. En variante, un porte-sucette peut comprendre une base 16 dont la forme permet également l'emboîtement du couvercle 15 de telle sorte que lorsqu'un enfant s'apprête à consommer une sucette, le couvercle 15 peut être assemblé à la base 16 par des moyens d'assemblage réversible similaires à ceux entre la tête 14 et le couvercle 15, tel que représenté sur la figure 2b.

L'invention n'est pas limitée aux modes de réalisation décrits. En particulier, un porte-sucette selon l'invention peut comprendre des formes et des dimensions différentes de celles décrites. Un porte-sucette selon l'invention peut être adapté de manière simple à différents types de sucette, différentes formes et dimensions du bâtonnet d'une sucette. Un porte-sucette selon l'invention peut également être adapté à certains esquimaux et autres denrées agencées à l'extrémité d'un bâtonnet.

Un porte-sucette selon l'invention offre une réelle protection à l'enfant qui consomme une sucette en éliminant tout risque de perforation du palais de l'enfant, tout risque d'étouffement de l'enfant, et en lui interdisant l'extraction de la sucette du porte-sucette. Un porte-sucette selon l'invention contribue à remodeler l'image négative et dangereuse associée à la consommation d'une sucette pour redonner à la sucette une image positive et sécuritaire liée au plaisir d'un enfant.

## Revendications

1. Porte-sucette sécurisé comprenant :
- un canon (2) s'étendant le long et autour d'un axe, dit axe (10) longitudinal, ledit canon (2) étant adapté pour recevoir par une de ses extrémités, dite extrémité (17) proximale, un bâtonnet (11) d'une sucette comprenant un bonbon (12) de sucette agencé à une extrémité de ce bâtonnet (11),
- une collerette (3) agencée au voisinage de ladite extrémité (17) proximale dudit canon (2) et s'étendant radialement,
- un corps (1) principal agencé autour dudit canon (2) et présentant une forme et des dimensions adaptées pour qu'une main d'un enfant puisse s'en saisir,
**caractérisé en ce qu'**il comprend des moyens (4) de blocage unidirectionnel par coincement conique d'un bâtonnet (11) de sucette logé dans ledit canon (2), lesdits moyens (4) de blocage étant adaptés pour bloquer longitudinalement ce bâtonnet (11) à l'intérieur dudit canon (2) et empêcher toute extraction axiale de ce bâtonnet (11) du côté de l'extrémité (17) proximale dudit canon (2), de manière à ce qu'un enfant ne puisse pas retirer la sucette du porte-sucette par cette extrémité (17) proximale.

2. Porte-sucette selon la revendication 1, **caractérisé en ce que** ladite collerette (3) présente une forme et des dimensions radiales supérieures aux dimensions d'une bouche présentant en ouverture maximale, une longueur de 4 cm et une largeur de 3 cm, de manière à empêcher tout risque de pénétration, dans une bouche d'un enfant, du bâtonnet (11) d'une sucette logée dans ledit canon (2),

3. Porte-sucette selon l'une des revendications 1 ou 2, **caractérisé en ce que** ledit canon (2) présente une section droite transversale dont les dimensions sont plus petites que l'encombrement transversal hors tout d'un bonbon (12) de sucette de telle sorte que le bonbon (12) de sucette forme une butée de maintien du bonbon (12) de la sucette à l'extérieur dudit canon (2) de manière à ce qu'un enfant puisse sucer ledit bonbon (12).

4. Porte-sucette selon l'une des revendications 1 à 3, **caractérisé en ce que** lesdits moyens (4) de blocage sont adaptés pour permettre le déplacement d'un bâtonnet (11) à l'intérieur dudit canon (2) de l'extrémité (17) proximale vers l'extrémité (18) distale dudit canon (2), de manière à ce que le bâtonnet (11) de sucette puisse être extrait du porte-sucette par l'extrémité (18) distale dudit canon (2) après que le bonbon (12) de sucette ait été consommé.

5. Porte-sucette selon l'une des revendications 1 à 4, **caractérisé en ce que** lesdits moyens (4) de blocage sont agencés en regard de l'extrémité (18) distale dudit canon (2).

6. Porte-sucette selon la revendication 5, **caractérisé en ce que** lesdits moyens (4) de blocage comprennent un disque (7) élastique agcncé perpendiculairement audit axe (10) longitudinal, ledit disque (7) comprenant :
- une ouverture (8) centrale, d'axe coincidant avec ledit axe (10) longitudinal, et de dimensions radiales inférieures aux dimensions hors tout de la section droite transversale d'un bâtonnet (11),
- au moins deux fentes (9) radiales traversantes reliées à ladite ouverture (8) centrale du disque (7) et délimitant ainsi au moins deux portions de disque agencées de part et d'autre desdites fentes (9), lesdites portions de disques étant adaptées pour plier sous l'effet d'une pression exercée par un bâtonnet (11) de sucette sur le disque (7), ce qui permet le passage du bâtonnet (11) de sucette à travers le disque (7) dans un sens et bloque le déplacement du bâtonnet (11) en sens inverse.

7. Porte-sucette selon l'une des revendications 1 à 6, **caractérisé en ce qu'**il comprend des moyens de neutralisation, à deux états, des moyens (4) de blocage, un état actif dans lequel les moyens (4) de blocage unidirectionnel sont neutralisés de manière à ce qu'un opérateur puisse retirer la sucette du canon (2) du porte-sucette par l'extrémité (17) proximale et un état inactif dans lequel les moyens (4) de blocage empêchent l'extraction d'un bâtonnet (11) de sucette par l'extrémité (17) proximale, le passage de l'état inactif à l'état actif nécessitant l'exécution d'au moins un mouvement indépendant du maniement de la sucette de sorte que l'extraction d'une sucette par l'extrémité (17) proximale requière au moins deux mouvements conjugués.

8. Porte-sucette selon les revendications 6 et 7 prises ensemble, **caractérisé en ce que** ledit corps (1) principal comprend :
- une colonne (13) d'axe coïncidant avec l'axe (10) longitudinal et portant ledit disque (7) élastique,
- une tête (14) portant ledit canon (2) et ladite collerette (3), ladite tête (14) étant montée sur ladite colonne (13) par l'intermédiaire de moyens de coulissement élastique adaptés pour permettre le coulissement de ladite tête (14) le long de la colonne (13) par une pression exercée par un opérateur sur ladite tête (3) et pour la ramener en position initiale en l'absence de pression, ledit coulissement permettant à l'extrémité distale dudit canon (2) d'exercer une pression sur ledit disque (7) élastique de manière à faire plier les portions dudit disque (7) et libérer le bâtonnet (11) de l'emprise du disque (7) élastique.

9. Porte-sucette selon l'une des revendications 1 à 8, **caractérisé en ce qu'**il comprend un couvercle (15) protecteur amovible adapté pour être agencé sur la tête (14) de manière à ce qu'il protège la sucette dont le bâtonnet (11) est logé dans ledit canon (2) lorsque la sucette n'est pas consommée, et pour être agencé sur l'extrémité de la colonne (13) à l'opposé lorsque la sucette va être consommée.

10. Porte-sucette selon l'une des revendications 1 à 9, **caractérisé en ce que** ladite collerette (3) présente une forme et des dimensions similaires à celles d'une tétine.

## Patentansprüche

1. Sicherheitsstil für Lutscher, umfassend:
- ein Rohr (2), das sich entlang und um eine Achse erstreckt, genannt Längsachse (10), wobei das Rohr (2) ausgelegt ist, um durch eines seiner Enden, genannt proximales Ende (17), ein Stäbchen (11) eines Lutschers aufzunehmen, umfassend ein Lutscherbonbon (12), das an einem Ende dieses Stäbchens (11) angeordnet ist,
- einen Kragen (3), der in der Nähe des proximalen Endes (17) der Rohrs (2) angeordnet ist und sich radial erstreckt,
- einen Hauptkörper (1), der um das Rohr (2) angeordnet ist und eine Form und Abmessungen aufweist, und ausgelegt sind, damit eine Hand eines Kindes sie greifen kann,
**dadurch gekennzeichnet, dass** er Mittel (4) zur einseitig gerichteten Blockierung durch konisches Verklemmen eines Stäbchens (11) eines Lutschers umfasst, das in dem Rohr (2) angebracht ist, wobei die Blockiermittel (4) ausgelegt sind, um der Länge nach dieses Stäbchen (11) im Inneren des Rohrs (2) zu blockieren und jede axiale Entnahme dieses Stäbchens (11) von der Seite des proximalen Endes (17) des Rohrs (2) zu verhindern, so dass ein Kind den Lutscher nicht durch dieses proximale Ende (17) vom Sicherheitsstil für Lutscher entfernen kann.

2. Sicherheitsstil für Lutscher nach Anspruch 1, **dadurch gekennzeichnet, dass** der Kragen (3) eine Form und radiale Abmessungen aufweist, die größer als die Abmessungen eines Mundes sind, der eine maximale Öffnung, eine Länge von 4 cm und eine Breite von 3 cm aufweist, um jedes Risiko des Eindringens des Stabchens (11) eines Lutschers, das in dem Rohr (2) aufgenommen ist, in den Mund eines Kindes zu verhindern.

3. Sicherheitsstil für Lutscher nach einem der Ansprüche 1 oder 2, **dadurch gekennzeichnet, dass** das Rohr (2) einen geraden Querschnitt aufweist, dessen Abmessungen kleiner als die gesamte Querausdehnung eines Bonbons (12) eines Lutschers ist, sodass das Bonbon (12) des Lutschers eine Festhalteerhöhung des Bonbons (12) des Lutschers am Endes des Rohrs (2) bildet, so dass ein Kind das Bonbon (12) lutschen kann.

4. Sicherheitsstil für Lutscher nach einem der Ansprüche 1 bis 3, **dadurch gekennzeichnet, dass** die Blockiermittel (4) ausgelegt sind, um die Verschiebung eines Stäbchens (11) im Inneren des Rohrs (2) vom proximalen Ende (17) zum distalen Ende (18) des Rohrs (2) zu ermöglichen, sodass das Stäbchen (11) des Lutschers vom Sicherheitsstil für Lutscher durch das distale Ende (18) des Rohrs (2) herausgezogen werden kann, nachdem das Bonbon (12) des Lutschers verzehrt wurde.

5. Sicherheitsstil für Lutscher nach einem der Ansprüche 1 bis 4, **dadurch gekennzeichnet, dass** die Blockierungsmittel (4) gegenüber dem distalen Ende (18) des Rohrs (2) angeordnet sind.

6. Sicherheitsstil für Lutscher nach Anspruch 5, **dadurch gekennzeichnet, dass** die Blockierungsmittel (4) eine elastische Scheibe (7) umfassen, die senkrecht zu der Längsachse (10) angeordnet ist, wobei die Scheibe (7) Folgendes umfasst:
- eine zentrale Öffnung (8)mit einer Achse, die mit der Längsachse (10) zusammenfällt, und mit radialen Abmessungen, die kleiner als die gesamten Abmessungen des geraden Querschnitts eines Stäbchens (11) sind,
- mindestens zwei querende radiale Spalten (9), die mit der zentralen Öffnung (8) der Scheibe (7) verbunden sind und so mindestens zwei Scheibenabschnitte begrenzen, die auf beiden Seiten der Spalten (9) angeordnet sind, wobei die Scheibenabschnitte ausgelegt sind, um sich unter der Einwirkung eines Drucks zu biegen, der durch ein Lutscherstäbchen (11) auf die Scheibe (7) ausgeübt wird, wodurch der Durchgang des Lutscherstäbchens (11) durch die Scheibe (7) in einer Richtung ermöglicht und die Verschiebung des Stäbchens (11) in der entgegengesetzten Richtung blockiert wird.

7. Sicherheitsstil für Lutscher nach einem der Ansprüche 1 bis 6, **dadurch gekennzeichnet, dass** er Mittel zur Neutralisierung in zwei Zuständen, der Blockierungsmittel (4) umfasst, einen aktiven Zustand, in dem die Mittel zur einseitig gerichteten Blockierung (4) derart neutralisiert werden, dass ein Bediener den Lutscher aus dem Rohr (2) des Sicherheitsstils für Lutscher durch das proximale Ende (17) zurückziehen kann, und einen inaktiven Zustand, in dem die Blockierungsmittel (4) das Herausziehen eines Lutscherstäbchens (11) durch das proximale Ende (17) verhindern, wobei der Übergang von inaktiven Zustand in den aktiven Zustand die Durchführung von mindestens einer Bewegung unabhängig von der Betätigung des Lutschers erfordert, so dass das Herausziehen eines Lutschers durch das proximale Ende (17)mindestens zwei gemeinsame Bewegungen erfordert.

8. Sicherheitsstil für Lutscher nach Anspruch 6 und 7 zusammengenommen, **dadurch gekennzeichnet, dass** der Hauptkörper (1) Folgendes umfasst:
- eine Säule (13) mit einer Achse, die mit der Längsachse (10) zusammenfällt und die elastische Scheibe (7) trägt,
- einen Kopf (14), der das Rohr (2) und den Kragen (3) trägt, wobei der Kopf (14) auf der Säule (13) mit Hilfe von elastischen Gleitmitteln montiert ist, die ausgelegt sind, um das Gleiten des Kopfs (14) entlang der Säule (13) durch einen Druck zu ermöglichen, die von einem Bediener auf den Kopf (3) ausgeübt wird, und um ihn bei Abwesenheit des Drucks in die ursprüngliche Position zurückzubringen, wobei das Gleiten dem distalen Ende des Rohrs (2) ermöglicht, einen Druck auf das elastische Scheibe (7) auszuüben, um die Abschnitte der Scheibe (7) zu biegen und das Stäbchen (11) vom Einfluss der elastischen Scheibe (7) freizusetzen.

9. Sicherheitsstil für Lutscher nach einem der Ansprüche 1 bis 8, **dadurch gekennzeichnet, dass** er eine abnehmbare Schutzabdeckung (15) umfasst, die ausgelegt ist, um auf dem Kopf (14) angeordnet zu sein, so dass sie den Lutscher schützt, dessen Stäbchen (11) in dem Rohr (2) aufgenommen ist, wenn der Lutscher nicht verzehrt wird, und um auf dem Ende der Säule (13) auf der gegenüber liegenden Seite angeordnet zu sein, wenn der Lutscher verzehrt wird.

10. Sicherheitsstil für Lutscher nach einem der Ansprüche 1 bis 9, **dadurch gekennzeichnet, dass** der Kragen (3) eine Form und Abmessungen aufweist, die denjenigen eines Saugers ähnlich sind.

## Claims

1. A safety lollipop holder comprising:
- a tube (2) extending along and around an axis, known as the longitudinal axis (10), said tube (2) being designed to receive through one of its ends, known as the proximal end (17), a stick (11) of a lollipop comprising a lollipop sweet (12) arranged at one end of this stick (11),
- a collar (3) arranged in the vicinity of said proximal end (17) of said tube (2) and extending radially,
- a main body (1) arranged about said tube (2) and having a shape and dimensions designed so that the hand of a child may grip said body,
**Characterised in that** it comprises means (4) for the one-way clamping by means of conical wedging of a lollipop stick (11) held in said tube (2), said clamping means (4) being designed to clamp this stick (11) in the lengthwise direction inside said tube (2) and prevent the stick (11) from being removed axially from the proximal end (17) of said tube (2), so that a child cannot withdraw the lollipop from the lollipop holder through this proximal end (17).

2. The lollipop holder according to claim 1, **characterised in that** said collar (3) has a shape and radial dimensions greater than the dimensions of a mouth having, when fully open, a length of 4 cm and a width of 3 cm, so as to prevent any risk of penetration, in the mouth of a child, of the stick (11) of a lollipop held in said tube (2),

3. The lollipop holder according to one of claims 1 or 2, **characterised in that** said tube (2) has a transverse cross section of which the dimensions are smaller than the overall transverse spatial requirement of a lollipop sweet (12) such that the lollipop sweet (12) forms an abutment for holding the sweet (12) of the lollipop outside said tube (2) so that a child may suck said sweet (12).

4. The lollipop holder according to one of claims 1 to 3, **characterised in that** said clamping means (4) are designed to permit the displacement of a stick (11) inside said tube (2) from the proximal end (17) to the distal end (18) of said tube (2), so that the lollipop stick (11) may be removed from the lollipop holder through the distal end (18) of said tube (2) after the lollipop sweet (12) has been consumed.

5. The lollipop holder according to one of claims 1 to 4, **characterised in that** said clamping means (4) are arranged opposite the distal end (18) of said tube (2).

6. The lollipop holder according to claim 5, **characterised in that** said clamping means (4) comprise a resilient disc (7) arranged perpendicular to said longitudinal axis (10), said disc (7) comprising:
- a central opening (8), with an axis coinciding with said longitudinal axis (10), and radial dimensions which are less than the overall dimensions of the transverse cross section of a stick (11),
- at least two continuous radial slots (9) connected to said central opening (8) of the disc (7) and thus defining at least two disc portions arranged on both sides of said slots (9), said disc portions being designed to fold under the action of pressure exerted by a lollipop stick (11) on the disc (7) which permits the passage of the lollipop stick (11) through the disc (7) in one direction and blocks the displacement of the stick (11) in the opposite direction.

7. The lollipop holder according to one of claims 1 to 6, **characterised in that** it comprises means for deactivating the clamping means (4) in two states, an active state in which the one-way clamping means (4) are deactivated so that an operator may remove the lollipop from the tube (2) of the lollipop holder through the proximal end (17) and an inactive state in which the clamping means (4) prevent the removal of a lollipop stick (11) through the proximal end (17), the passage from the inactive state to the active state requiring the execution of at least one movement independent of the handling of the lollipop such that the removal of a lollipop through the proximal end (17) requires at least two combined movements.

8. The lollipop holder according to claims 6 and 7 taken together, **characterised in that** said main body (1) comprises:
- a column (13) with an axis coinciding with the longitudinal axis (10) and bearing said resilient disc (7),
- a head (14) bearing said tube (2) and said collar (3), said head (14) being mounted on said column (13) by means of resilient sliding means designed to permit the sliding of said head (14) along the column (13) by a pressure exerted by an operator on said head (3) and to bring it into an initial position in the absence of pressure, said sliding action making it possible for the distal end of said tube (2) to exert pressure on said resilient disc (7) so that the portions of said disc (7) are folded and so that it is possible to release the stick (11) from the grip of the resilient disc (7).

9. The lollipop holder according to one of claims 1 to 8, **characterised in that** it comprises a removable protective cover (15) designed to be arranged on the head (14) so that it protects the lollipop, the stick (11) thereof being held in said tube (2), when the lollipop is not consumed, and designed to be arranged on the end of the opposing column (13) when the lollipop is to be consumed.

10. The lollipop holder according to one of claims 1 to 9, **characterised in that** the shape and dimensions of said collar (3) are similar to those of a soother.
